(19) Europäisches Patentamt

European Patent Office

Office européen des brevets

(11) **EP 1 174 730 A2**

(12) **EUROPÄISCHE PATENTANMELDUNG**

(43) Veröffentlichungstag:
**23.01.2002 Patentblatt 2002/04**

(51) Int Cl.[7]: **G01S 13/524**, G01S 7/295

(21) Anmeldenummer: **01117448.9**

(22) Anmeldetag: **19.07.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **21.07.2000 DE 10035530**

(71) Anmelder: **EADS Deutschland GmbH
81663 München (DE)**

(72) Erfinder:
• **Bickert, Bernhard
89079 Ulm (DE)**
• **Meyer-Hilberg, Jochen, Dr.
89275 Elchingen (DE)**

(74) Vertreter: **Meel, Thomas
Dornier GmbH L H G
88039 Friedrichshafen (DE)**

(54) **Universelles zweikanaliges STAP-Filter**

(57)  Zur Unterdrückung von störenden Festzielen in Radar-Rohdaten wird ein STAP-Verfahren beschrieben, bei welchem die Bestimmung der Filterkoeffizienten und die Filterung der Daten im Frequenzbereich stattfindet und sich somit auf wenige Rechenoperationen pro Matrixelement der Range/Doppler-Matrix beschränkt. Da mit dem erfindungsgemäßen STAP-Filter die optimale Filtercharakteristik realisiert werden kann, funktioniert die Festzielunterdrückung auch im Bereich der Nebenkeulen der Antenne. Mit dem aufgezeigten Verfahren können sowohl Daten einzelner, benachbarter Kanäle (L/R, links/rechts) verarbeitet werden, als auch Summen- und Differenzsignale ($\Sigma/\Delta$).

EP 1 174 730 A2

**Beschreibung**

Die Erfindung betrifft ein Verfahren zur Berechnung der Koeffizienten eines STAP-Filters und zur Filterung von Radar-Rohdaten der Entfernungs-Doppler-Matrizen zweier benachbarter Empfangskanäle mittels Space-Time Adaptive Processing (STAP).

Radar-Rohdaten bestehen aus einer Mischung von Signalen (z.B.: Echos von bewegten und feststehenden Zielen) und Störungen (z.B.: Rauschen). In der Regel sollen bei der Auswertung dieser Radar-Rohdaten die Störungen unterdrückt werden, so daß die Signale gut detektierbar sind.

Zur Verbesserung der Detektion von bewegten Zielen zum Beispiel in SAR-Bildern ist es notwendig, Störungen als auch Signale, welche von feststehenden Zielen stammen, zu unterdrücken. Ein geeignetes Verfahren hierfür ist das Space-Time Adaptive Processing (STAP). Bei den hierzu bekannten Verfahren werden die Radar-Rohdaten in der Regel im Zeitbereich gefiltert (Special Issue on Space-Time Adaptive Processing (STAP), *Electronics & Communication Engineering Journal,* Band 11, 1999, Februar, Nr. 1, Seite 29 - 38, ISSN 0954-0695). Da die Bestimmung der Filterkoeffizienten und die Filterung im Zeitbereich rechenaufwendig sind, muß für den praktischen Einsatz dieser Verfahren die Anzahl der Filterkoeffizienten auf relativ wenige beschränkt werden. Dadurch ergibt sich eine begrenzte Filterqualität und somit eine nicht-optimale Festzielunterdrückung, die darüber hinaus nur im Bereich der Antennenhauptkeule zufriedenstellend arbeitet.

In der nachveröffentlichten Schrift DE 100 12 411 wird ein Verfahren vorgestellt, bei welchem die Bestimmung der Filterkoeffizienten und die Filterung im Frequenzbereich erfolgen, so daß sich die Anzahl der Rechenoperationen pro Matrixelement auf wenige beschränkt. Da auf diese Weise dennoch eine optimale Filtercharakteristik realisiert werden kann, funktioniert die Festzielunterdrückung auch im Bereich der Nebenkeulen der Antenne.

Weitere STAP-Verfahren unter Berücksichtigung mehrerer Empfangskanäle sind aus der US 5,907,302 sowie der DE 199 06 149 A1 bekannt.

Den bekannten Verfahren zur STAP-Verarbeitung ist jedoch gemein, daß sie entweder Daten einzelner benachbarter Kanäle oder Daten aus Summen- und Differenz-Kanälen (Σ/Δ-Daten) verarbeiten können, nicht aber beide Datentypen.

Die Aufgabe der Erfindung ist es, ein neuartiges Verfahren zur STAP-Verarbeitung zu finden, welches gegenüber den aus dem Stand der Technik bekannten Verfahren eine erweiterte Funktionalität aufweist.

Die Aufgabe wird durch ein Verfahren gelöst, welches es erlaubt, im Rahmen der STAP-Verarbeitung Daten von zweikanaligen Systemen, die entweder als Daten einzelner Kanäle (L/R, links/rechts) oder aber als Daten von Summen- und Differenz-Kanälen (Σ/Δ-Daten) vorliegen, auf die gleiche Art und Weise zu verarbeiten.

Dabei findet erfindungsgemäß die Berechnung der Filterkoeffizienten und die Filterung im Frequenzbereich statt, wobei gewinnbringend zur Bestimmung der Filterkoeffizienten die Autokorrelationen der Signale beider Empfangskanäle, als auch die Kreuzkorrelationen dieser Signale berücksichtigt werden.

Gemäß der Erfindung läuft die Filterung im Frequenzbereich im wesentlichen in drei Schritten ab. Dabei werden in einem ersten Schritt die Auto- und Kreuzkorrelationen beider Eingangskanäle bestimmt, wobei hier in einfachster Weise auf dem Fachmann allgemein bekannte Algorithmen zurückgegriffen werden kann. Im zweiten Schritt werden die Filterkoeffizienten $\alpha(i)$ und $\beta(i)$ des STAP-Filters bestimmt und abschließend in einem dritten Schritt die Eingangssignale $\vec{X}_1$ und $\vec{X}_2$ im Frequenzbereich gefiltert, um zu einer Ergebnismatrix $Y_{clutterfrei}$ zu gelangen, welche eine Range/Doppler-Matrix repräsentiert, in der die Echos fester Ziele unterdrückt und die Echos bewegter Ziele kohärent verstärkt enthalten sind.

Ein für die Durchführung vorteilhaftes Ausführungsbeispiel des erfindungsgemäßen Verfahrens sei nachfolgend aufgezeigt. Gegeben seien hierbei $X_1(i,j)$ und $X_2(i,j)$ mit $1 \leq i \leq N_{DZ}$ und $1 \leq j \leq N_{RG}$, wobei $X_1(i,j)$ die komplexe Range/Doppler-Matrix des ersten Kanals (z.B. $L$ oder $\Sigma$) eines kohärenten Radarsystems ist und $X_2(i,j)$ die komplexe Range/Doppler-Matrix des zweiten Kanals (z.B. $R$ oder $\Delta$). Desweiteren sei $N_{DZ}$ die Anzahl der Doppler-Zellen und $N_{RG}$ die Anzahl der Range Gates (Entfernungs-Tore). Die gesuchte, mit möglichst wenig Rechenoperationen zu ermittelnde komplexe Range/Doppler-Matrix sei $Y_{clutterfrei}(i,j)$.

Im ersten Schritt des erfindungsgemäßen Verfahrens werden die Auto- und Kreuzkorrelationen beider Eingangskanäle gemäß den Gleichungen 1 bis 3 bestimmt. Hierbei bezeichnet $r_{11}$ die Autokorrelation des ersten Kanals, $r_{22}$ die Autokorrelation des zweiten Kanals und $r_{12}$ die Kreuzkorrelation beider Kanäle.

$$r_{11}(i) = \sum_{j=1}^{N_{RG}} X_1(i,j) \cdot X_1^*(i,j) \qquad\qquad \text{Gl. 1}$$

$$r_{22}(i) = \sum_{j=1}^{N_{RG}} X_2(i,j) \cdot X_2^*(i,j) \qquad\qquad \text{Gl. 2}$$

$$r_{12}(i) = \sum_{j=1}^{N_{RG}} X_1(i,j) \cdot X_2^*(i,j) \qquad\qquad \text{Gl. 3}$$

mit $1 \leq i \leq N_{DZ}$

In vorteilhafter Weise ist es denkbar, daß die aus den beiden Eingangskanälen bestimmten Werte der Auto- und Kreuzkorrelationen vor der Bestimmung der Filterkoeffizienten $\alpha(i)$ und $\beta(i)$ des STAP-Filters einer zusätzlichen Verarbeitung unterzogen werden.

Hierbei ist es beispielsweise gewinnbringend, zu ermitteln, welcher der beiden Kanäle das bessere Signal-zu-Rausch-Verhältnis (S/N) aufweist. Eine mögliche Methode hierzu ist in Gleichung Gl.4 aufgezeigt.

$$\frac{\max(r_{11}(i) \mid 1 \leq i \leq N_{DZ})}{\sum\limits_{i=1}^{N_{DZ}} r_{11}(i)} > \frac{\max(r_{22}(i) \mid 1 \leq i \leq N_{DZ})}{\sum\limits_{i=1}^{N_{DZ}} r_{22}(i)} \qquad\qquad \text{Gl. 4}$$

Ist diese Gleichung wahr, dann weist der erste Kanal (entsprechend $\vec{X}_1$ mit $r_{11}$) ein besseres Signal-zu-Rausch-Verhältnis auf, ansonsten der zweite (entsprechend $\vec{X}_2$ mit $r_{22}$).

Im Anschluß an diese Ermittlung kann dann in vorteilhafter Weise in Abhängigkeit davon, welcher der beiden Kanäle $\vec{X}_1$ oder $\vec{X}_2$ ein besseres Signal-zu-Rausch-Verhältnis (SIN) aufweist, ein bestimmtes Paar von Gleichungen zur Bestimmung der Filterkoeffizienten $\alpha(i)$ und $\beta(i)$ des STAP-Filters herangezogen werden. Hierbei wird gewinnbringend die Auswahlregel so gestaltet, daß für den Fall, daß der Kanal $\vec{X}_1$, ein besseres Signal-zu-Rausch-Verhältnis (SIN) aufweist, das Gleichungspaar Gl. 5 und Gl. 6 ausgewählt wird, und ansonsten das Gleichungspaar Gl. 7 und Gl. 8.

$$a(i) = -(2l + 1) \qquad\qquad \text{Gl. 5}$$

$$b(i) = \sum_{k=N_{DZ}-l}^{N_{DZ}+l} \frac{r_{12}\big((i+k-1)\bmod N_{DZ}+1\big)}{r_{22}\big((i+k-1)\bmod N_{DZ}+1\big)} \qquad\qquad \text{Gl. 6}$$

für $1 \leq i \leq N_{DZ}$
mit $l = 0,1,2,...;$

$$a(i) = \sum_{k=N_{DZ}-l}^{N_{DZ}+l} \frac{r_{12}^*\big((i+k-1)\bmod N_{DZ}+1\big)}{r_{11}\big((i+k-1)\bmod N_{DZ}+1\big)} \qquad\qquad \text{Gl. 7}$$

$$b(i) = -(2l + 1) \qquad\qquad \text{Gl. 8}$$

für $1 \leq i \leq N_{DZ}$
mit $l = 0,1,2,...;$

Der Index $l$ in Gl. 7 und Gl. 8 steht im Zusammenhang mit einer Mittelung über mehrere benachbarte Doppler-Zellen. Gemäß Gl. 7 und Gl. 8 wird über genau $2l + 1$ benachbarte Dopplerzellen gemittelt. Jedoch ist auch $l = 0$ zugelassen, d.h. auf eine derartige Mittelung über mehrere Dopplerzellen kann verzichtet werden.

In vorteilhafter Weise kann nun das erfindungsgemäße Verfahren dahingehend modifiziert werden, daß von der Auswahlregel abgewichen wird, wenn der Kanal mit dem schlechteren Signal-zu-Rausch-Verhältnis (S/N) deutlich weniger Signalleistung im Verhältnis zum besseren Kanal aufweist (beispielsweise mindestens 20 dB weniger Signalleistung). Hierdurch kann vermieden werden, daß sich durch einen extrem kleinen Faktor im Nenner ($r_{11}$ bzw. $r_{22}$) eine ungewollte Überhöhung eines Filterkoeffizienten ($b(i)$ bzw. $a(i)$) ergibt. In diesem Ausnahmefall wird das jeweils andere Gleichungspaar verwendet.

In besonders vorteilhafter Weise können die Filterkoeffizienten nach ihrer Bestimmung normiert werden. Hierdurch wird eine homogene Filterwirkung über alle Dopplerfrequenzen ermöglicht. Besonders gewinnbringend ist dies mittels der in Gl. 9 und Gl. 10 angeführten Gleichungen möglich:

$$\alpha(i) = \frac{a(i)}{\sqrt{a(i) \cdot a^*(i) + b(i) \cdot b^*(i)}} \qquad \text{Gl. 9}$$

$$\beta(i) = \frac{b(i)}{\sqrt{a(i) \cdot a^*(i) + b(i) \cdot b^*(i)}} \qquad \text{Gl. 10}$$

mit $1 \leq i \leq N_{DZ}$.

Um Rechenleistung einzusparen, ist es jedoch auch denkbar, auf die Normierung zu verzichten und für die Filterkoeffizienten $\alpha(i)$ und $\beta(i)$ direkt die Filterkoeffizienten $a(i)$ bzw. $b(i)$ heranzuziehen.

In einem abschließenden Schritt des erfindungsgemäßen Verfahrens werden mittels der Filterkoeffizienten $\alpha(i)$ und $\beta(i)$ die komplexen Range/Doppler-Matrizen $X_1(i,j)$ und $X_2(i,j)$ verarbeitet. Hierdurch erhält man gemäß Gl. 11 die Ergebnismatrix $Y_{clutterfrei}$, welche die gesuchte Range/Doppler. Matrix repräsentiert, in welcher die Echos fester Ziele unterdrückt und die Echos bewegter Ziele kohärent verstärkt enthalten sind.

$$Y_{clutterfrei}(i, j) = \alpha(i) \cdot X_1(i,j) + \beta(i) \cdot X_2(i,j) \qquad \text{Gl. 11}$$

mit $1 \leq i \leq N_{DZ}$ und $1 \leq j \leq N_{RG}$

Durch das erfindungsgemäße Verfahren zur STAP-Verarbeitung, welches gleichsam in der Lage ist, sowohl einzelne Kanäle (links/rechts), als auch Summen- und Differenzkanäle zu verarbeiten, lassen sich optimale Filtercharakteristiken realisieren. Hierdurch wird es möglich, auch im Bereich der Antennennebenkeulen Festziele zu unterdrücken.

## Patentansprüche

1. Verfahren zur Berechnung der Koeffizienten eines STAP-Filters und zur Filterung von Radar-Rohdaten der Entfernungs-Doppler-Matrizen $\vec{X}_1$ und $\vec{X}_2$ zweier Empfangskanäle mittels Space-Time Adaptive Processing (STAP), **dadurch gekennzeichnet,**
   **daß** das Verfahren die Daten der Entfernungs-/Doppler-Matrizen $\vec{X}_1$ und $\vec{X}_2$, sowohl einzelner, benachbarter Kanäle (L/R, links/rechts), als auch von Summen- und Differenz-Signale ($\Sigma/\Delta$) auf die gleiche Weise verarbeitet.

2. Verfahren nach Anspruch 1, **dadurch gekennzeichnet, daß** die Berechnung der Koeffizienten und die Filterung im Frequenzbereich stattfindet.

3. Verfahren nach Anspruch 1 oder 2, **dadurch gekennzeichnet, daß** bei der Bestimmung der Filterkoeffizienten die Autokorrelationen der Signale beider Empfangskanäle, als auch die Kreuzkorrelation dieser Signale berücksichtigt werden.

4. Verfahren nach einem der Ansprüche 1 bis 3, **dadurch gekennzeichnet, daß** die Filterung im Frequenzbereich im wesentlichen in drei Schritten abläuft, in der Art, daß

   - in einem ersten Schritt die Werte der Auto- und Kreuzkorrelationen beider Eingangskanäle bestimmt werden,
   - in einem zweiten Schritt die Filterkoeffizienten $\alpha(i)$ und $\beta(i)$ des STAP-Filters bestimmt werden
   - und daß abschließend in einem dritten Schritt die Eingangssignale $\vec{X}_1$ und $\vec{X}_2$ im Frequenzbereich gefiltert werden, um zu einer Ergebnismatrix $Y_{clutterfrei}$ zu gelangen, welche eine Range/Doppler-Matrix repräsentiert, in der die Echos fester Ziele unterdrückt und die Echos bewegter Ziele kohärent verstärkt enthalten sind.

5. Verfahren nach Anspruch 4, **dadurch gekennzeichnet, daß** vor der Bestimmung der Filterkoeffizienten $\alpha(i)$ und $\beta(i)$ des STAP-Filters, die aus den beiden Eingangskanälen bestimmten Werte der Auto- und Kreuzkorrelationen einer zusätzlichen Verarbeitung unterzogen werden.

6. Verfahren nach Anspruch 5, **dadurch gekennzeichnet, daß** ermittelt wird, welcher der beiden Kanäle das beste Signal-zu-Rausch-Verhältnis (SIN) aufweist.

7. Verfahren nach einem der Ansprüche 5 bis 6, **dadurch gekennzeichnet, daß** abhängig davon, welcher der beiden Kanäle ein besseres Signal-zu-Rausch-Verhältnis (SIN) aufweist, ein bestimmtes Paar von Gleichungen zur Bestimmung der Filterkoeffizienten $\alpha(i)$ und $\beta(i)$ des STAP-Filters herangezogen wird.

8. Verfahren nach Anspruch 7, **dadurch gekennzeichnet, daß** von der Auswahlregel abgewichen wird, wenn der Kanal mit dem schlechteren Signal-zu-Rausch-Verhältnis (SIN) deutlich weniger Signalleistung im Verhältnis zum besseren Kanal aufweist.

9. Verfahren nach einem der Ansprüche 5 bis 8, **dadurch gekennzeichnet, daß** die Korrelationswerte jeweils benachbarter Doppler-Zellen zu einer Mittelung herangezogen werden.

10. Verfahren nach einem der Ansprüche 4 bis 9, **dadurch gekennzeichnet, daß** nach der Bestimmung der Filterkoeffizienten $\alpha(i)$ und $\beta(i)$ des STAP-Filters, diese Koeffizienten einer Normierung unterzogen werden.